# EUROPÄISCHE PATENTSCHRIFT

(11) **EP 1 471 337 B1**
(45) Veröffentlichungstag und Bekanntmachung des Hinweises auf die Patenterteilung: **28.06.2017**
(21) Anmeldenummer: 04009179.5
(22) Anmeldetag: 17.04.2004
(51) Int. Cl.: G01F 23/46

(54) **Vorrichtung zur Messung des Füllstands einer in einem Behälter aufgenommenen Flüssigkeit**
Device for measuring the level of a liquid in a container
Dispositif de mesure du niveau d'un liquide dans un contenant

(30) Priorität: 26.04.2003 DE 10318938
(43) Veröffentlichungstag der Anmeldung: 27.10.2004
(73) Patentinhaber: GOK Regler-und Armaturen-Gesellschaft mit beschränkter Haftung & Co Kommanditgesellschaft, 97340 Marktbreit (DE)
(72) Erfinder: Krämer, Dieter, 97256 Geroldshausen (DE)
(74) Vertreter: Dr. Gassner & Partner mbB

(56) Entgegenhaltungen:
- EP-A- 0 989 389
- EP-A- 1 072 873
- DE-U1- 29 920 401
- GB-A- 2 077 443
- US-A- 4 061 901
- US-A- 5 023 806

## Beschreibung

Die Erfindung betrifft eine Vorrichtung nach dem Oberbegriff des Anspruchs 1.

Eine Vorrichtung ist aus der DE 197 30 196 C2 bekannt. Dabei weist eine Einrichtung zur Messung eines vertikalen Abstands eines Schwimmkörpers von einem Gehäuse zwei Impulsgeberscheiben auf, die mittels einer Auswerte- und Steuereinrichtung abgetastet werden. Aus den abgetasteten Impulsfolgen kann auf den Abstand des Schwimmerkörpers vom Gehäuse geschlossen werden. Die bekannte Vorrichtung ist relativ kompliziert aufgebaut. Die Auswertung der abgetasteten Impulsfolgen ist umständlich.

Die DE 37 21 164 C2 beschreibt ein Füllstandsmessgerät, bei dem eine Änderung des vertikalen Abstands des Schwimmers vom Gehäuse eine Drehbewegung eines im Gehäuse aufgenommenen äußeren Magnetrings verursacht. Im äußeren Magnetring ist ein mit einem Elektromotor verstellbarer innerer Magnetring vorgesehen. Der äußere und der innere Magnetring sind so angeordnet, dass sich deren Magnetfelder kompensieren. Wenn der äußere Magnetring gegenüber dem inneren Magnetring verstellt wird, hebt sich die Kompensation der Magnetfelder auf. Das wird mittels eines Hallsensors gemessen. Mittels des Elektromotors wird anschließend der innere Magnetring soweit gedreht, bis die Magnetfelder sich wieder kompensieren. Aus dem Drehwinkel des inneren Magnetrings kann auf die vertikale Position des Schwimmers geschlossen werden. Die bekannte Vorrichtung ist ebenfalls kompliziert aufgebaut. Sie erfordert das Vorsehen einer elektromechanischen Stelleinrichtung sowie einer Einrichtung zur Regelung der elektromechanischen Stelleinrichtung. Elektromechanische Stelleinrichtungen sind insbesondere nach längeren Betriebszeiten störanfällig.

Die EP 1 041 370 A1 beschreibt eine Vorrichtung zur Messung des Füllstands. Eine Änderung des Füllstands bewirkt die Drehung eines Drehkörpers, der in nicht koaxialer Anordnung einen Permanentmagneten aufweist. Im Wirkbereich des Permanentmagneten sind gegenüberliegend versetzt um jeweils 90° 4 Hall-Sensoren angeordnet. Sofern der Permanentmagnet in der Nähe einer der Hall-Sensoren sich befindet, wird ein entsprechendes Signal erzeugt. Mit der bekannten Vorrichtung kann der Füllstand nicht besonders genau gemessen werden.

Eine weitere Vorrichtung ist aus der DE 200 08 029 U1 bekannt. Dabei wird zur Messung des Füllstands die Länge des von einer Umlenkrolle abgewickelten Fadens oder die Drehstellung der Umlenkrolle gemessen. Zur Messung der Länge des Fadens sind daran Markierungen, z. B. Perlen, angebracht, die von einer Detektiereinrichtung erfasst und gezählt werden. In ähnlicher Weise können auch besondere Markierungen an der Umlenkrolle vorgesehen sein, welche mittels einer, z. B. als Lichtschranke ausgebildeten, Detektiereinrichtung erfasst und gezählt werden können.

Eine Markierung des Fadens mit Perlen hat sich in der Praxis als nachteilig erwiesen. Zum einen kann es bedingt durch das Vorsehen der Perlen zu Störungen beim Auf- und Abwickeln des Fadens kommen. Zum anderen muss eine besonders große Umlenkrolle zur Aufnahme des durch die Perlen verursachten erhöhten Wickelvolumens bereitgestellt werden. Auch das Vorsehen der aus dem Stand der Technik bekannten besonderen Markierungen an einer Stirnseite der Umlenkrolle ist aufwändig. Schließlich beruht das bekannte Prinzip zur Ermittlung des Füllstands darauf, Markierungen zu zählen. Infolgedessen kann eine Drehrichtung der Umlenkrolle nur dann ermittelt werden, wenn mehrere Detektiereinrichtungen vorgesehen sind. Auch das ist aufwändig.

Die DE 299 20 401 U1 sowie die US 5,023,806 offenbaren eine Vorrichtung zur Messung eines Füllstands einer Flüssigkeit in einem Behälter. Dabei wird der Füllstand im Behälter über einen Schwimmer übertragen, welcher über eine Stange mit einem Kronradgetriebe verbunden ist. Eine vertikale Auslenkung des Schwimmers wird durch das Kronradgetriebe in eine Drehbewegung einer Welle umgewandelt, an deren Ende ein Magnet aufgenommen ist.

Die EP 0 989 389 A2 offenbart eine Füllstandsmessvorrichtung für Tintenpatronen. Dabei werden Bewegungen eines schwenkbaren Schwimmers mittels eines Magnetfeldsensors erfasst.

Die US 4,061,901 sowie die GB 2 077 443 A offenbaren Vorrichtungen zur Messung des Füllstands, bei denen die Höhe des Füllstands wiederum durch die Bewegung eines Schwimmers erfasst wird. Die Bewegung des Schwimmers wird über ein Zahnradgetriebe auf eine Messvorrichtung übertragen.

Aus der EP 1 072 873 A2 ist eine Vorrichtung zur Messung der Füllhöhe eines druckführenden Flüssigkeitsbehälter bekannt. Dabei betätigt ein Schwimmer über ein Umlenkgetriebe eine Welle, an deren Ende innerhalb des Behälters ein Magnet vorgesehen ist. Zur Erfassung der Stellung des Schwimmers wird mittels eines gekreuzten Halbbrücken-Sensors die Richtung des vom Magneten erzeugten Magnetfelds bestimmt. Der gekreuzte Halbbrücken-Sensor ist in einem außerhalb des Behälters angeordneten Gehäuse untergebracht.

Aufgabe der Erfindung ist es, eine Vorrichtung zur Messung des Füllstands einer in einem Behälter aufgenommenen Flüssigkeit anzugeben, die möglichst einfach und kostengünstig herstellbar ist und welche eine elektrische Übertragung des ermittelten Füllstands an ein wahlweise entfernt liegendes Anzeigegerät erlaubt. Nach einem weiteren Ziel der Erfindung soll der Füllstand auch bei einem eventuellen Ausfall der Elektronik am Behälter angezeigt werden. Schließlich soll eine möglichst genaue Anzeige des Füllstands ermöglicht werden.

Diese Aufgabe wird durch die Merkmale des Anspruchs 1 gelöst. Zweckmäßige Ausgestaltungen ergeben sich aus den Merkmalen der Ansprüche 2 bis 11.

Im Sinne der Erfindung wird unter einem "statischen Mittel zur Messung" ein Mittel verstanden, das eine elektronische Messung der Winkelstellung des Magnetfelds ermöglicht. Insbesondere sind zur Messung der Winkelstellung des Magnetfelds keine elektromechanisch bewegbaren Komponenten erforderlich. Die vorgeschlagene Vorrichtung ist einfach und kostengünstig herstellbar. Sie ermöglicht die elektrische Übertragung des ermittelten Füllstands an ein wahlweise entfernt liegendes Anzeigegerät.

Das Mittel zur Messung kann mindestens einen magnetoresitiven Widerstand, vorzugsweise zwei um einen Winkel von 90° versetzte magnetoresistive Widerstände, aufweisen. Es kann sich dabei beispielsweise um Hall-Sensoren handeln. Die magnetoresistiven Widerstände sind zweckmäßigerweise radial bezüglich einer Drehachse des Permanentmagneten angeordnet. Das ermöglicht unter Verwendung einer herkömmlich geeigneten Auswerteelektronik eine exakte Bestimmung der Winkelstellung des Magnetfelds.

Vorteilhafterweise weist das Mittel zur Messung einen gekreuzten Halbbrücken (GMR)-Sensor mit zwei unterschiedlich magnetisierten Ebenen auf, mit dem die Richtung des vom Permanentmagneten erzeugten Felds über einen Winkelbereich von 360° eindeutig bestimmbar ist. Die Abkürzung "GMR" steht für "Giant Magneto Resistors". Die Benutzung solcher gekreuzter Halbbrücken-Sensoren ist besonders vorteilhaft, weil zur Bestimmung der Richtung des Magnetfelds nur ein einziger solcher Sensor benötigt wird. Der gekreuzte Halbbrücken-Sensor ist zweckmäßigerweise gegenüberliegend des Permanentmagneten im Bereich einer durch den Permanentmagneten verlaufenden gedachten Drehachse angeordnet. Im Vergleich zur Benutzung zweier magnetoresistiver Widerstände entfällt beim gekreuzten Halbbrücken-Sensor der Aufwand für deren genaue Justierung. Unter Verwendung einer geeigneten Auswerteschaltung kann mit einem gekreuzten Halbbrücken-Sensor sowohl die Drehrichtung der Rolle als auch deren genauer Drehwinkel bestimmt werden. Die erfindungsgemäße Vorrichtung ermöglicht eine exakte und stufenlose Bestimmung der Füllhöhe des Behälters sowie die Übertragung auf eine entfernt liegende Anzeigevorrichtung.

Zweckmäßigerweise ist der Permanentmagnet zylindrisch, vorzugsweise nach Art eines Rohrabschnitts, ausgebildet. Das ermöglicht eine besonders einfache koaxiale Anbringung des Permanentmagneten, z. B. an einem koaxial zur Rolle angeordneten Ritzel.

Erfindungsgemäß ist der Drehkörper über ein Getriebe mit einer im Gehäuse drehbar um eine Achse gehaltene Rolle verbunden. Auf der Rolle ist ein Faden aufgewickelt, an dessen Ende der Schwimmkörper befestigt ist, so dass der vertikale Abstand des Schwimmkörpers eine korrespondierende Winkelstellung des Drehkörpers bewirkt und damit der Füllstand ermittelbar ist. Die vorgeschlagene Anordnung ermöglicht eine besonders einfache und kompakte Ausgestaltung der Vorrichtung.

Nach weiterer Maßgabe der Erfindung ist das Getriebe ein Planetengetriebe, bei dem ein an der Rolle angebrachtes Kronrad im Eingriff mit einem fest mit der Achse verbundenen Ritzel und dem Eingriff mit einem fest am Gehäuse angebrachten weiteren Ritzel ist. Der Permanentmagnet ist auf dem Ritzel aufgenommen und ragt in eine im weiteren Ritzel gebildete zylindrische Ausnehmung. Das Ritzel bildet in diesem Fall den Drehkörper. Die vorgeschlagene Getriebeanordnung ermöglicht eine besonders kompakte Gehäusegestaltung. Die Übersetzung bei dem Planetengetriebe ist zweckmäßigerweise so gewählt, dass eine Bewegung des Schwimmkörpers über den maximalen vertikalen Abstand eine Drehbewegung des Drehkörpers im Bereich von 320 bis 400°, vorzugsweise 340 bis 380°, bewirkt.

Das Magnetfeld des Permanetmagneten wirkt durch die Wand des aus einem nichtmetallischen Werkstoff, vorzugsweise spritzgegossenem Kunststoff, hergestellten Gehäuses. Infolgedessen kann das Gehäuse gasdicht ausgebildet sein, so dass der Behälter damit gasdicht verschließbar ist. Sofern es sich bei dem Behälter beispielsweise um einen Öltank handelt, wird damit ein Entweichen unerwünschter Öldämpfe vermieden. Eine druckdichte Ausführung des Gehäuses ist in diesem Fall allerdings nicht erforderlich.

Nach einer weiteren Ausgestaltung ist eine integrierte Schaltung zur Erfassung und Auswertung der vom Mittel zur Messung gelieferten Messwerte vorgesehen. Eine solche Schaltung hat einen geringen Raumbedarf.

Weiterhin kann an einem vom Ritzel entfernten Ende der Achse ein Zeiger angebracht sein. Das ermöglicht, beispielsweise unter Zuhilfenahme einer geeigneten Skala, auf einfache Weise eine Ablesung des Füllstands am Behälter, auch wenn die Einrichtung zur Ermittlung einmal defekt sein sollte.

Nach einem weiteren Ausgestaltungsmerkmal ist die Einrichtung zur Ermittlung außerhalb des Gehäuses an einer dem Zeiger gegenüberliegenden Gehäuserückwand in der Nähe des Permanentmagneten angebracht. Mit der vorgeschlagenen Ausführung wird auf besonders einfache Weise eine Verlagerung sämtlicher stromführender Bauteile außerhalb des Gehäuses erzielt. Bei einer gasdichten Ausbildung des Gehäuses kann es auch im Falle eines Kurzschlusses der stromführenden Bauteile nicht zu einer Explosion kommen.

Es kann ferner eine elektrische Anzeigevorrichtung zur Anzeige eines mittels der integrierten Schaltung ermittelten Füllstands vorgesehen sein. Die elektrische Anzeigevorrichtung kann zur Anzeige eine Vielzahl von Leuchtdioden oder eine Flüssigkristallanzeige aufweisen. Zur Stromversorgung kann eine Batterie oder ein Akku in einem weiteren Gehäuse der elektrischen Anzeigevorrichtung aufgenommen sein. Die elektrische Anzeigevorrichtung kann demnach eine separate über eine Kabelverbindung mit dem Gehäuse verbundene Baueinheit sein, mit der entfernt vom Anbringungsort der Messvorrichtung der Füllstand im Behälter ermittelt werden kann.

Nachfolgend wird ein Ausführungsbeispiel der Erfindung anhand der Zeichnung näher erläutert. Es zeigen:
- Fig. 1: eine schematische Ansicht und
- Fig. 2: die vom Halbbrücken-Sensor gelieferten Signale in Abhängigkeit der Richtung des Magnetfelds.

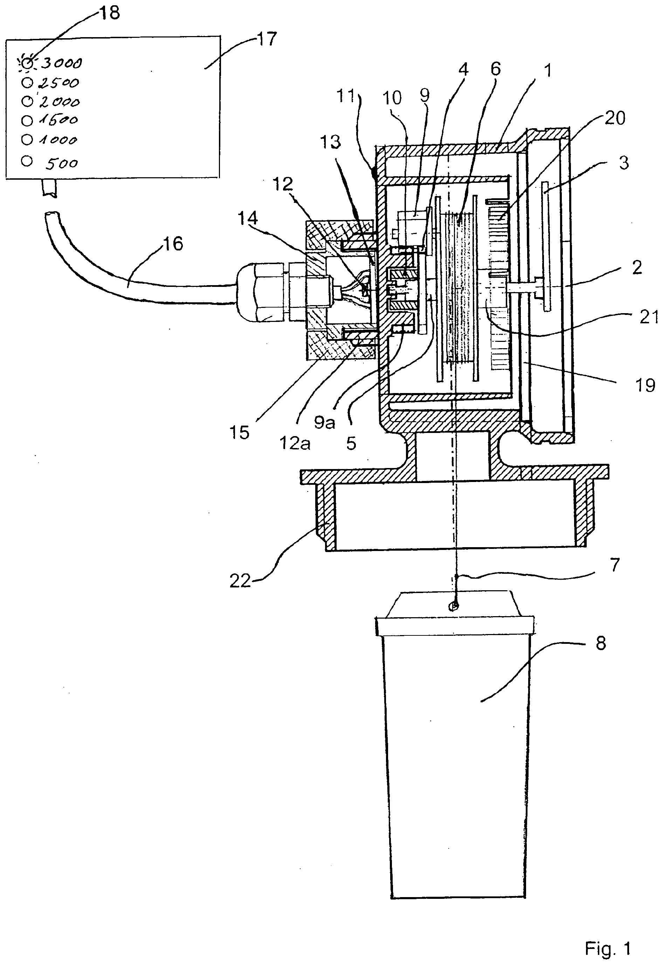

Bei der in Fig. 1 gezeigten Vorrichtung ist in einem, vorzugsweise aus spritzgegossenem Kunststoff hergestellten, Gehäuse 1 eine Achse 2 drehbar gelagert. An einem Ende ist an der Achse 2 ein Zeiger 3 und in der Nähe des anderen Endes ein Ritzel 4 fest angebracht. Auf einer vom Ritzel 4 sich erstreckenden Hülse 5 ist eine relativ zum Ritzel 4 drehbare Rolle 6 aufgenommen. Auf der Rolle 6 ist ein Faden 7 aufgewickelt, an dessen freiem Ende ein Schwimmkörper 8 befestigt ist. An der Rolle 6 ist ferner ein Kronrad 9 angebracht, das in das Ritzel 4 und in ein weiteres fest am Gehäuse 1 angebrachtes Ritzel 9a eingreift, so dass das Ritzel 4 mit dem Kronrad 9 nach Art eines Planetengetriebes angetrieben wird. Die Übersetzung des Planetengetriebes ist zweckmäßigerweise so gewählt, dass das Ritzel 4 beim Abrollen der gesamten Länge des Fadens 7 von der Rolle 6 sich um etwa 360° dreht. Auf dem Ritzel 4 ist in koaxialer Anordnung ein rohrartig ausgebildeter Permanentmagnet 10 befestigt. Der Permanentmagnet 10 ragt in eine im weiteren Ritzel 9a vorgesehene zylindrische Ausnehmung. Der Permanentmagnet 10 ragt bis nahe an eine Innenseite einer Gehäuserückwand 11. An der Gehäuserückwand 11 ist ein Gewindestutzen 12a vorgesehen. Eine einen GMR-Sensor 12 aufnehmende Platine 13 ist in einem Sensorträger 14 gehalten, der mittels einer Überwurfmutter 15 mit dem Gewindestutzen 12a verschraubt ist. Der GMR-Sensor 12 ist gegenüberliegend dem Permanentmagneten 10 im Bereich einer gedachten Verlängerung der Achse 2 angeordnet. Ein Kabel 16 ist mit einer Anzeigevorrichtung 17 verbunden. Die Anzeigevorrichtung 17 kann zur Anzeige eines Füllstands eines (hier nicht gezeigten) Behälters z. B. mit mehreren Leuchtdioden 18 versehen sein. Anstelle der Leuchtdioden 18 kann auch eine andere geeignete Anzeigevorrichtung, z. B. ein LCD-Display, vorgesehen sein. Zur Stromversorgung können in einem weiteren Gehäuse der Anzeigeeinrichtung eine Batterie oder ein Akku vorgesehen sein.

Eine hinter dem Zeiger 3 angeordnete Skala 19 ermöglicht eine weitere Anzeige des Füllstands. Eine mit ihrem einen Ende am Gehäuse 1 angebrachte Spiralfeder 20 ist mit ihrem anderen Ende im Eingriff mit einer weiteren Hülse 21, die sich von der Rolle 6 erstreckt. Ein einstückig am Gehäuse 1 angespritzter weiterer Gewindestutzen 22 dient der Verbindung der vom Gehäuse 1 umgebenen Messvorrichtung mit dem Behälter.

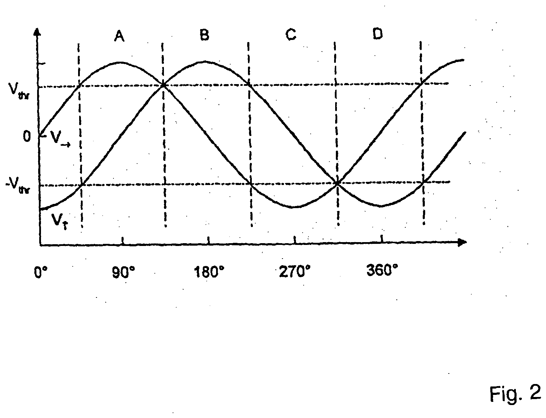

Nachfolgend wird die Funktion der Vorrichtung in Zusammensicht mit Fig. 2 näher erläutert. In einer Ausgangsstellung des Schwimmkörpers 8 steht der Zeiger 3 auf einem Maximalwert der Skala 19. Der GMR-Sensor 12 erfasst das in Fig. 2 gezeigte Signal für "0°" oder für "360°". Bei einer Entfernung des Schwimmkörpers 8 von der Nullstellung, d. h. bei einem Abrollen des Fadens 7 von der Rolle 6, wird der Zeiger 3 über das aus dem Kronrad 9 dem weiteren Ritzel 9a und dem Ritzel 4 gebildete Planetengetriebe entsprechend gedreht. Mit dem Ritzel 4 dreht sich auch das vom Permanentmagneten 10 erzeugte Magnetfeld. In Fig. 2 sind die vom GMR-Sensor 12 gelieferten Signale in Abhängigkeit der Richtung des Magnetfelds gezeigt. Die beiden Halbbrücken-Signale sind um 90° versetzt und lassen sich durch einfache Vergleiche den 4 Quadranten A, B, C und D zuordnen. Innerhalb eines Quadranten A, B, C und D bestimmt das Signal mit der größten Steigung die Richtung des Magnetfelds durch lineare Interpolation. Die Auswertung der Signale erfolgt mittels einer (hier nicht gezeigten) integrierten Schaltung, die zweckmäßigerweise im weiteren Gehäuse der Anzeigevorrichtung 17 aufgenommen ist. Aus der gemessenen Winkelstellung des Magnetfelds wird mittels einer, zweckmäßigerweise ebenfalls im weiteren Gehäuse aufgenommenen, integrierten Schaltung eine Füllhöhe zugeordnet, welche dann mittels einer der Leuchtdioden 18 angezeigt wird.

Anstelle des hier gezeigten GMR-Sensors können auch zwei magnetoresistive Sensoren verwendet werden, die in einem Winkel von 90° zueinander auf der Platine 13 angeordnet sind. Auch in diesem Fall ist die Platine 13 gegenüberliegend dem Permanentmagneten 10 im Bereich einer gedachten Verlängerung der Achse 2 angebracht. Die magnetoresistiven Sensoren sind radial bezüglich der Achse 2, vorzugsweise auf demselben Radius, um 90° versetzt angeordnet. Unter einem magnetoresistiven Widerstand wird ein Bauelement verstanden, welches in Abhängigkeit der Stärke und/oder Richtung eines äußeren Magnetfelds seinen Widerstand ändert. Solche magnetoresistiven Widerstände können z. B. Hall-Sensoren sein.

Im Rahmen der vorliegenden Erfindung sind auch andere Ausgestaltungen der Vorrichtung denkbar. So kann der den Permanentmagneten 10 aufnehmende Drehkörper auch über andere geeignete Getriebe oder dgl. bewegt werden. Wesentlich ist lediglich, dass die Drehbewegung des Drehkörpers zur Höhe des Füllstands der im Behälter aufgenommenen Flüssigkeit korrespondiert. Der Schwimmkörper 8 kann zur Erzeugung der Drehbewegung auch über andere Mittel mit dem Drehkörper verbunden sein. Es kann z. B. sein, dass der Schwimmkörper über eine drehbare Welle oder ein vertikal verfahrbares Gestänge mit dem Drehkörper in Wirkverbindung steht.

### Bezugszeichenliste

- 1: Gehäuse
- 2: Achse
- 3: Zeiger
- 4: Ritzel
- 5: Hülse
- 6: Rolle
- 7: Faden
- 8: Schwimmkörper
- 9: Kronrad
- 9a: weiteres Ritzel
- 10: Permanentmagnet
- 11: Gehäuserückwand
- 12: GMR-Sensor
- 12a: Gewindestutzen
- 13: Platine
- 14: Sensorträger
- 15: Überwurfmutter
- 16: Kabel
- 17: Anzeigevorrichtung
- 18: Leuchtdiode
- 19: Skala
- 20: Spiralfeder
- 21: weitere Hülse
- 22: weiterer Gewindestutzen

- A, B, C, D: Quadranten

## Patentansprüche

1. Vorrichtung zur Messung des Füllstands einer in einem Behälter aufgenommenen Flüssigkeit,
mit einem Schwimmkörper (8) und einer in einem Gehäuse (1) untergebrachten Einrichtung zur Messung eines vertikalen Abstands des Schwimmkörpers (8) vom Gehäuse (1),
wobei die Einrichtung zur Messung einen in Abhängigkeit des vertikalen Abstands sich einstellenden, mit einem koaxial angeordneten Permanentmagneten (10) versehenen Drehkörper umfasst,
wobei am Gehäuse (1) ein im Wirkbereich eines vom Permanentmagneten (10) erzeugten Magnetfelds angebrachtes, statisches Mittel zur Messung der Winkelstellung des Magnetfelds vorgesehen ist,
der Drehkörper über ein Getriebe (9, 9a, 4) mit einer im Gehäuse (1) drehbar um eine Achse (2) gehaltenen Rolle (6) verbunden ist,
auf der Rolle (6) ein Faden (7) aufgewickelt ist, an dessen Ende der Schwimmkörper (8) befestigt ist, so dass der vertikale Abstand des Schwimmkörpers (8) eine korrespondierende Winkelstellung des Drehkörpers bewirkt und damit der Füllstand ermittelbar ist, **dadurch gekennzeichnet, dass**
das Getriebe (9, 4) ein Planetengetriebe ist, bei dem ein an der Rolle (6) angebrachtes Kronrad (9) im Eingriff mit einem fest mit der Achse (2) verbundenen Ritzel (4) und im Eingriff mit einem fest am Gehäuse (1) angebrachten weiteren Ritzel (9a) ist, und
der Permanentmagnet (10) auf dem mit der Achse verbundenen Ritzel (4) aufgenommen ist und in eine im fest am Gehäuse angebrachten weiteren Ritzel (9a) gebildete zylindrische Ausnehmung ragt.

2. Vorrichtung nach Anspruch 1, wobei das Mittel zur Messung mindestens einen magnetoresistiven Widerstand, vorzugsweise zwei um einen Winkel von 90° versetzte magnetoresistive Widerstände, aufweist.

3. Vorrichtung nach Anspruch 2, wobei die magnetoresistiven Widerstände Hall-Sensoren sind.

4. Vorrichtung nach einem der vorhergehenden Ansprüche, wobei das Mittel zur Messung einen gekreuzten Halbbrücken(GMR)-Sensor (12) mit zwei unterschiedlich magnetisierten Ebenen aufweist, mit dem die Winkelstellung des vom Permanentmagneten (10) erzeugten Magnetfelds über einen Winkelbereich von 360° eindeutig bestimmbar ist.

5. Vorrichtung nach einem der vorhergehenden Ansprüche, wobei der Permanentmagnet (10) zylindrisch, vorzugsweise nach Art ein Rohrabschnitts, ausgebildet ist.

6. Vorrichtung nach einem der vorhergehenden Ansprüche, wobei das Gehäuse (1) gasdicht ausgebildet ist, so dass der Behälter damit gasdicht verschliessbar ist.

7. Vorrichtung nach einem der vorhergehenden Ansprüche, wobei eine integrierte Schaltung zur Erfassung und Auswertung der vom Mittel zur Messung gelieferten Messwerte vorgesehen ist.

8. Vorrichtung nach einem der vorhergehenden Ansprüche, wobei an einem vom Ritzel (4) entfernten Ende der Achse (2) ein Zeiger (3) angebracht ist.

9. Vorrichtung nach Anspruch 8, wobei das Mittel zur Messung (12) außerhalb des Gehäuses (1) an einer dem Zeiger (3) gegenüberliegenden Gehäuserückwand (11) in der Nähe des Permanentmagneten (10) angebracht ist.

10. Vorrichtung nach Anspruch 7, wobei eine elektrische Anzeigevorrichtung (17) zur Anzeige eines mittels der integrierten Schaltung ermittelten Füllstands vorgesehen ist.

11. Vorrichtung nach Anspruch 10, wobei die elektrische Anzeigevorrichtung (17) zur Anzeige eine Vielzahl von Leuchtdioden (18) oder eine Flüssigkristallanzeige (LCD) aufweist.

## Claims

1. A device for measuring the level of a liquid received in a container,
comprising a float (8) and an apparatus accommodated in a housing (1) for measuring a vertical distance of the float (8) from the housing (1),
wherein the measuring apparatus comprises a rotary body, which adjusts itself depending on the vertical distance and is provided with a coaxially arranged permanent magnet (10),
wherein a static means mounted in the effective region of a magnetic field generated by the permanent magnet (10) and designed to measure the angular position of the magnetic field is provided on the housing (1),
the rotary body is connected via a gear unit (9, 9a, 4) to a reel (6) held in the housing (1) rotatably about a spindle (2),
a thread (7) is wound on the reel (6), with the float (8) secured to the end of said thread such that the vertical distance of the float (8) causes a corresponding angular position of the rotary body and therefore the level of the liquid can be determined,
**characterised in that**
the gear unit (9, 4) is a planetary gearing, in which a crown gear mounted on the reel (6) is engaged with a pinion (4) fixedly connected to the spindle (2) and is engaged with a further pinion (9a) fixedly mounted on the housing (1), and
the permanent magnet (10) is received on the pinion (4) connected to the spindle and protrudes into a cylindrical recess formed in a further pinion (9a) fixedly mounted on the housing.

2. The device according to claim 1, wherein the measuring means has at least one magnetoresistive resistor, preferably two magnetoresistive resistors offset by an angle of 90°.

3. The device according to claim 2, wherein the magnetoresistive resistors are Hall sensors.

4. The device according to any one of the preceding claims, wherein the measuring means has a crossed half-bridge (GMR) sensor (12) with two differently magnetised levels, by means of which the angular position of the magnetic field generated by the permanent magnet (10) can be clearly determined over an angular range of 360°.

5. The device according to any one of the preceding claims, wherein the permanent magnet (10) is cylindrical, preferably is formed in the manner of a tubular portion.

6. The device according to any one of the preceding claims, wherein the housing (1) is gas-tight, such that the container can be closed thereby in a gas-tight manner.

7. The device according to any one of the preceding claims, wherein an integrated circuit is provided for detecting and evaluating the measured values delivered by the measuring means.

8. The device according to any one of the preceding claims, wherein an indicator (3) is mounted on an end of the spindle (2) remote from the pinion (4).

9. The device according to claim 8, wherein the measuring means (12) is mounted outside the housing (1) on a housing rear wall (11) opposite the indicator (3) in the vicinity of the permanent magnet (10).

10. The device according to claim 7, wherein an electric display device (17) for displaying a level of the liquid determined by means of the integrated circuit is provided.

11. The device according to claim 10, wherein the electric display device (17) has a multiplicity of light-emitting diodes (18) or a liquid-crystal display (LCD) for the display.

## Revendications

1. Dispositif de mesure du niveau d'un liquide dans un contenant,
comportant un flotteur (8) et un équipement monté dans un boîtier (1) destiné à mesurer une distance verticale du flotteur (8) par rapport au boîtier (1),
en ce que l'équipement de mesure comporte un corps tournant muni d'un aimant permanent (10) disposé de manière coaxiale, se réglant en fonction de la distance verticale,
en ce qu'au niveau du boîtier (1) est prévu un moyen statique monté dans la zone active d'un champ magnétique généré par l'aimant permanent (10) pour la mesure de la position angulaire du champ magnétique,
le corps tournant est relié par le biais d'un train d'engrenages (9, 9a, 4) à un rouleau (6) maintenu en rotation autour d'un axe (2) dans le boîtier (1),
un fil (7) à l'extrémité duquel est fixé le flotteur (8) est enroulé sur le rouleau (6) de sorte que la distance verticale du flotteur (8) provoque une position angulaire correspondante du corps tournant et ainsi la détermination du niveau,
**caractérisé en ce que**
le train d'engrenages (9, 4) est un engrenage planétaire dans lequel une roue de couronne (9) montée sur le rouleau (6) est en prise avec un pignon (4) relié de manière solidaire à l'axe (2) et qui est en prise avec un autre pignon (9a) monté de manière solidaire sur le boîtier (1), et
l'aimant permanent (10) est positionné sur le pignon (4) relié à l'axe et fait saillie dans un évidement cylindrique formé dans l'autre pignon (9a) monté de manière solidaire sur le boîtier.

2. Dispositif selon la revendication 1, en ce que le moyen de mesure comporte au moins une résistance magnétorésistive, de préférence deux résistances magnétorésistives décalées d'un angle de 90°.

3. Dispositif selon la revendication 2, en ce que les résistances magnétorésistives sont des capteurs à effet Hall.

4. Dispositif selon l'une des revendications précédentes, en ce que le moyen de mesure comporte un capteur (GMR) en demi-pont croisé (12) présentant deux niveaux différemment aimantés, qui permet de déterminer précisément la position angulaire du champ magnétique généré par l'aimant permanent (10) sur une plage angulaire de 360°.

5. Dispositif selon l'une des revendications précédentes, en ce que l'aimant permanent (10) est réalisé de façon cylindrique, de préférence sous forme de segment tubulaire.

6. Dispositif selon l'une des revendications précédentes, en ce que le boîtier (1) est de conception étanche au gaz de sorte que le contenant puisse être fermé de manière étanche au gaz.

7. Dispositif selon l'une des revendications précédentes, en ce qu'un circuit intégré est prévu pour la saisie et l'analyse des valeurs mesurées fournies pour la mesure par le moyen.

8. Dispositif selon l'une des revendications précédentes, en ce qu'une aiguille (3) est montée sur une extrémité de l'axe (2) distante du pignon (4).

9. Dispositif selon la revendication 8, en ce que le moyen de mesure (12) est monté à l'extérieur du boîtier (1) au niveau d'une paroi arrière de boîtier (11) opposée à l'aiguille (3) à proximité de l'aimant permanent (10).

10. Dispositif selon la revendication 7, en ce qu'un dispositif d'affichage électrique (17) est prévu pour l'affichage d'un niveau déterminé au moyen du circuit intégré.

11. Dispositif selon la revendication 10, en ce que le dispositif d'affichage électrique (17) comporte pour l'affichage une pluralité de diodes électroluminescentes (18) ou un affichage à cristaux liquides (LCD).
